# DEMANDE DE BREVET EUROPEEN

(11) **EP 4 414 140 A1**
(43) Date de publication de la demande: **14.08.2024**
(21) Numéro de dépôt: 24155746.1
(22) Date de dépôt: 05.02.2024
(51) Int. Cl.: B25J 5/00, B25J 9/00

(54) **STATION D'ACCUEIL POUR ROBOT INDUSTRIEL**

(30) Priorité: 06.02.2023 FR 2301110
(71) Demandeur: B & S Robsim, 67500 Haguenau (FR)
(72) Inventeur: SCHNELLDORFER, Bodo, 67500 HAGUENAU (FR); SELLET, Christian, 67500 HAGUENAU (FR)
(74) Mandataire: Bugnion Genève

(57) **Abrégé**

Station d'accueil pour robot industriel (RI) muni d'une embase, ladite station d'accueil étant destinée à coopérer avec un robot mobile (RM) muni d'un plateau de transport mobile verticalement et destiné à supporter le robot industriel (RI), ladite station d'accueil s'étendant selon une direction longitudinale (X) et comportant un plateau support (6) supporté par un châssis (2), ledit châssis (2) étant configuré pour recevoir le robot mobile (RM) et ledit plateau support (6) comportant un logement ouvert à une extrémité longitudinale de sorte à présenter une forme en U, permettant la mise en place du robot mobile (RM) sous le plateau support (6) tout en permettant au robot industriel (RI) de se déplacer au-dessus du plateau support (6) et au robot industriel (RI) de reposer sur le plateau support (6) lors du retrait du plateau de transport, ladite station d'accueil comportant des moyens de détection du robot industriel et des moyens de positionnement du robot industriel sur le plateau support (6).

## Description

### DOMAINE TECHNIQUE ET ART ANTERIEUR

La présente invention se rapporte à une station d'accueil pour robot industriel et à un procédé de mise en place d'un robot industriel sur un robot d'accueil.

Dans un site industriel typique, il est d'usage de répartir, entre les diverses stations d'une ligne de production, des robots fixes effectuant chacun une séquence de tâches bien spécifiques. Ainsi, les robots sont configurés individuellement et sont maintenus dans cet état, aussi longtemps que nécessaire pour mener à bien leur mission productive, et ainsi éviter autant que possible les tâches fastidieuses et complexes d'initialisation et de reprogrammations des robots nécessaires après chaque mise hors fonctionnement ou chaque changement de station.

Les robots ont un emplacement fixe sur le site. Par exemple, les robots comportent une base sur laquelle est articulé un bras. La base est fixée au sol. Il n'est alors pas envisageable de déplacer facilement et rapidement les robots pour modifier leur tâche.

Si cette approche peut convenir à des sites industriels de taille intermédiaire à importante, le manque d'adaptabilité et les investissements nécessaires se révèlent problématiques dans de nombreuses autres configurations, en particulier pour des sites de taille plus réduite ou nécessitant des redéploiements fréquents.

En effet, à chaque événement ou changement nécessitant le déplacement et/ou remplacement d'un ou plusieurs robots, il est nécessaire d'une part de planifier et réaliser de lourdes tâches de manutention, et d'autre part d'initialiser et de configurer à nouveau chaque robot, individuellement, selon des programmes spécifiques.

De plus, lorsque l'usage régulier d'un même robot sur plusieurs stations de la ligne de production pourrait être envisagé, de sorte à réduire notamment les coûts, cette possibilité est vite écartée, car jugée trop complexe et risquée.

Il existe des robots mobiles qui comportent un dispositif moteur qui leur permet de se déplacer sur le site industriel de manière autonome. Le dispositif moteur comporte par exemple un moteur électrique et une batterie électrique pour alimenter le moteur électrique.

Cette solution est intéressante cependant elle présente un coût élevé puisque chaque robot comporte son propre dispositif moteur.

Le document US4664590 décrit une installation avec plusieurs stations d'accueil, des robots industriels destinés à être positionnés sur les stations d'accueil et un robot mobile qui déplace les robots industriels entre les stations d'accueil. Il est possible de modifier l'emplacement d'un robot industriel et donc d'avoir un robot industriel pouvant être déplacé d'une station d'accueil à l'autre et pouvant remplir plusieurs tâches en fonction de la charge de travail. Cependant le robot mobile offre une faible précision dans ses déplacements et la position du robot industriel sur une station d'accueil n'est pas répétable.

### EXPOSÉ DE l'INVENTION

C'est par conséquent un but de la présente invention d'offrir une installation comportant au moins une station d'accueil et au moins un robot industriel ne présentant pas l'inconvénient ci-dessus.

Le but énoncé ci-dessus est atteint par une installation comportant au moins une station d'accueil d'au moins un robot industriel comportant un châssis et un plateau support pour le robot industriel, le châssis et le plateau support étant configurés pour permettre la mise en place et le retrait du robot sur le support par un robot mobile partagé, et au moins un robot industriel destiné à être disposé sur la station d'accueil, l'installation comportant également des moyens de calibration automatique du robot industriel sur la station d'accueil.

Très avantageusement, les moyens de calibration comportent une caméra et une cible, l'un étant porté par le robot industriel et l'autre part la station d'accueil. Après mise en place du robot industriel sur la station d'accueil, la caméra vise la cible et l'étape de calibration ou d'étalonnage du robot a lieu. Le robot est ensuite prêt à fonctionner en présentant la précision requise et adaptée à la station d'accueil.

La calibration permet de repérer la position relative du robot et de la station d'accueil et ensuite d'adapter sa commande pour qu'elle prenne en compte cette position relative.

En effet, même si le positionnement du robot sur la station d'accueil est guidé, des jeux sont prévus pour tenir compte de l'imprécision du déplacement du robot mobile par rapport à la station d'accueil lorsqu'il apporte le robot industriel. En effet le robot mobile se positionne dans la station d'accueil mais la répétabilité de la position du robot mobile par rapport à la station d'accueil n'est pas assurée.

En d'autres termes, l'autocalibration du robot industriel a lieu à chaque changement de station d'accueil. Cette calibration peut avoir lieu simultanément au chargement du programme de commande du robot industriel dans l'unité de commande du robot industriel.

Grâce à l'invention, il est possible de modifier l'emplacement du robot industriel sur le site industriel au moyen d'un simple robot de manutention classique utilisé pour déplacer des charges, de type véhicule guidé autonome ou AGV (Automated Guided Vehicle en terminologie anglosaxonne) tout en assurant que le déplacement du robot industriel lors de l'exécution de sa tâche soit correct, ce robot mobile étant utilisé pour d'autres tâches.

De préférence, la caméra est portée par le robot industriel et la cible est portée par la station d'accueil.

En outre, la station d'accueil étant de structure relativement simple et légère elle peut quant à elle être facilement déplacée au sein du site en fonction des besoins.

De manière très avantageuse, la station d'accueil comporte des moyens d'alimentation électrique du robot industriel qui peuvent se connecter automatiquement au robot industriel lors de sa mise en place

Dans un exemple de réalisation préféré, le plateau support comporte des moyens de guidage du robot industriel lors de sa mise en place.

Le châssis comporte avantageusement des moyens de guidage du robot.

De manière très avantageuse, la station d'accueil comporte des moyens de communication avec le robot mobile, par exemple pour l'informer lorsque la position du robot sur la station d'accueil est celle attendue afin de permettre au robot mobile d'abaisser le robot industriel sur le plateau support de la station d'accueil.

La présente invention a alors pour objet une station d'accueil pour robot industriel muni d'une embase, ladite station d'accueil étant destinée à coopérer avec un robot mobile muni d'un plateau de transport mobile verticalement et destiné à supporter le robot industriel, ladite station d'accueil s'étendant selon une direction longitudinale et comportant un plateau support supporté par un châssis, ledit châssis étant configuré pour recevoir le robot mobile et ledit plateau support comportant un logement ouvert à une extrémité longitudinale de sorte à présenter une forme en U, permettant la mise en place du robot mobile sous le plateau support out en permettant au robot industriel de se déplacer au-dessus du plateau support et au robot industriel et de reposer sur le plateau support lors du retrait du plateau de transport.

Des moyens de calibration du robot industriel en position sur la station d'accueil sont avantageusement prévus, lesdits moyens de calibration étant configurés pour être activés automatiquement lorsque le robot industriel est en place sur la station d'accueil.

Dans un exemple de réalisation, ladite station d'accueil comportant des moyens de détection du robot industriel et des moyens de positionnement du robot industriel sur le plateau support coopérant avec des moyens portés par le robot industriel.

Par exemple, les moyens de détection du robot industriel comportent des capteurs de fin de course positionnés sur un fond du U du plateau support et configurés pour coopérer avec l'embase du plateau industriel et des moyen portés par le plateau pour détecter que l'embase repose effectivement sur le plateau support.

De préférence, la station d'accueil comporte des moyens de plaquage de l'embase du plateau industriel sur le plateau support. Les moyens de plaquage peuvent comporter des vérins pneumatiques pour assurer l'activation/désactivation des moyens de plaquage.

Dans un exemple préféré, la station d'accueil comporte des moyens d'alimentation électrique du robot industriel comprenant des moyens de connexion électrique au robot industriel et des moyens de déplacement desdits moyens de connexion électrique, de sorte à assurer la connexion des moyens de connexion de la station d'accueil à des moyens de connexion du robot industriel, lesdits moyens de déplacement comportant avantageusement au moins un vérin pneumatique.

La station d'accueil comporte avantageusement une unité de commande reliée aux moyens de détection de sorte à être informée de la présence du robot industriel et à envoyer un message au robot mobile, afin qu'il abaisse le plateau de transport, de sorte que le robot industriel repose sur le plateau support.

De préférence, l'unité de commande est configurée pour commander le vérin pneumatique des moyens de plaquage et les moyens de déplacement des moyens de connexion électrique de la station d'accueil.

De manière avantageuse, la station d'accueil comporte des moyens de guidages latéraux montés sur le plateau support et configurés pour coopérer avec le robot industriel lors de la mise en place du robot industriel dans la station d'accueil.

Selon une caractéristique additionnelle, les moyens de connexion électrique sont configurés pour permettre le chargement de programmes informatiques dans une unité de commande du robot industriel.

Un autre objet de la présente demande est un procédé de mise en place d'un robot industriel dans une station d'accueil selon l'invention, comportant les étapes dans lesquelles :
- Le robot industriel est chargé sur un robot mobile,
- Le robot mobile se positionne en regard de l'extrémité ouverte du plateau support aligné avec l'axe longitudinal,
- Le robot mobile positionne le plateau de transport en position haute,
- Le robot mobile se déplace en direction de la station d'accueil jusqu'à ce que les moyens de détection détectent la présence du robot industriel,
- Le robot mobile positionne le plateau de transport en position basse, le robot industriel reposant sur le plateau support.

L'unité de commande de la station d'accueil commande avantageusement la connexion électrique du robot industriel et le chargement du programme informatique.

### BREVE DESCRIPTION DES DESSINS

La présente demande sera mieux comprise à l'aide de la description qui va suivre et des dessins en annexe sur lesquels :
- La figure 1 est une vue en perspective d'un exemple de station d'accueil selon l'invention,
- La figure 2 est une vue en perspective de la station d'accueil de la figure 1 sur laquelle un robot industriel est monté, le robot mobile étant encore en position dans la station d'accueil,
- La figure 3 est une vue en perspective de la station d'accueil et du robot industriel de la figure 2 selon un autre point de vue,
- La figure 4 est une vue en perspective de dessus de la station d'accueil et du robot industriel en cours de mise en place,
- La figure 5 est une représentation schématique d'un exemple de robot mobile selon l'invention,
- les figures 6A, 6B, 6C, 6D et 6E sont des représentations schématiques de la station d'accueil, du robot industriel et du robot mobile à différentes étapes de mise en place du robot industriel.

### DÉTAILLÉE DE MODES DE RÉALISATION

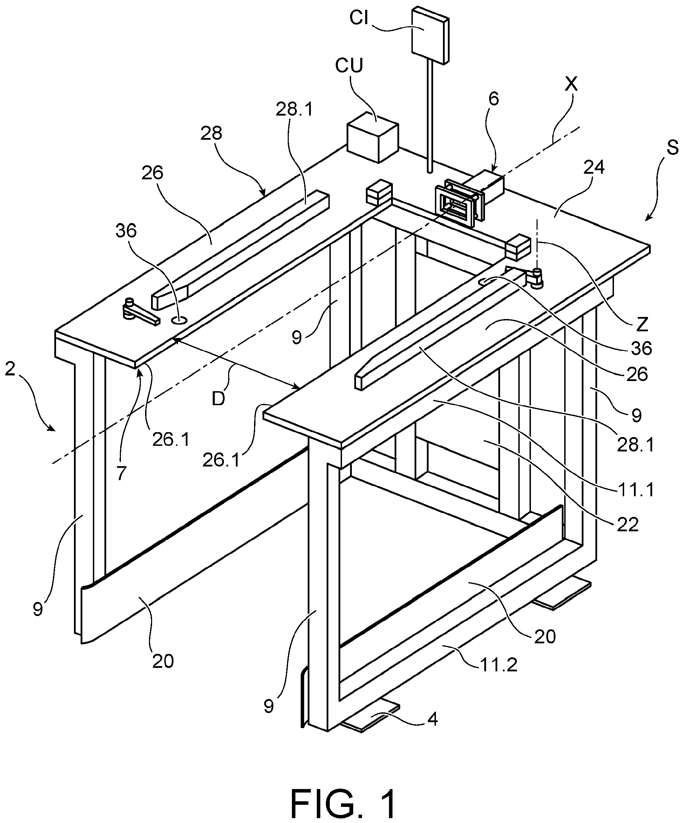

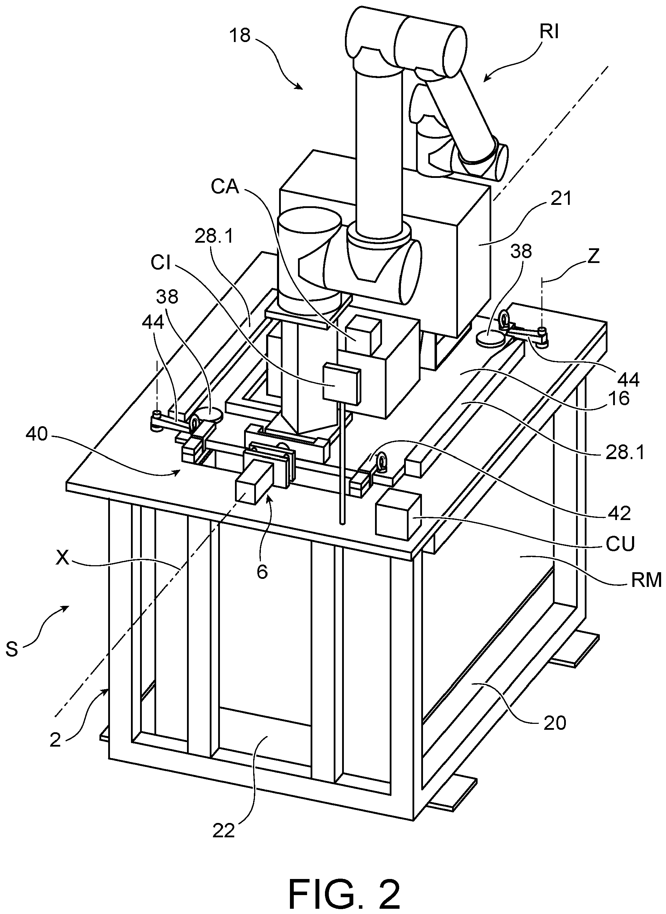

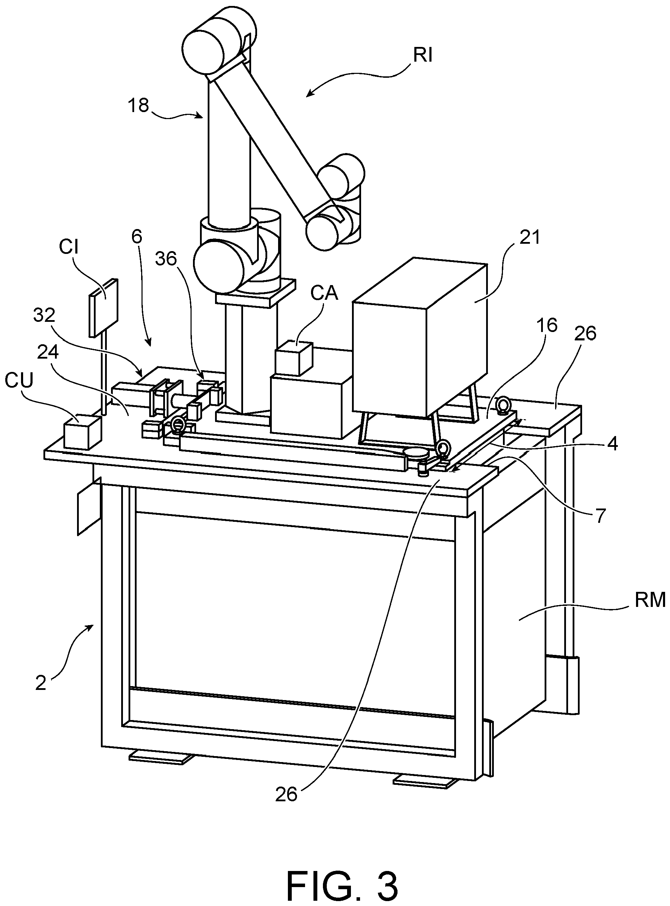

Sur la figure 1, on peut voir un exemple de station d'accueil S pour un robot industriel RI, et sur les figures 2 à 4 on peut voir une installation comportant la station d'accueil et un robot industriel.

La station d'accueil S comporte un châssis 2 destiné à reposer sur le sol et à être fixé à celui. Dans l'exemple, le châssis 2 comporte au niveau de sa partie inférieure des brides 4 de fixation au sol destinées à être traversés par exemple par des vis d'ancrage.

La station d'accueil comporte également un plateau support 6 destiné à supporter le robot industriel RI.

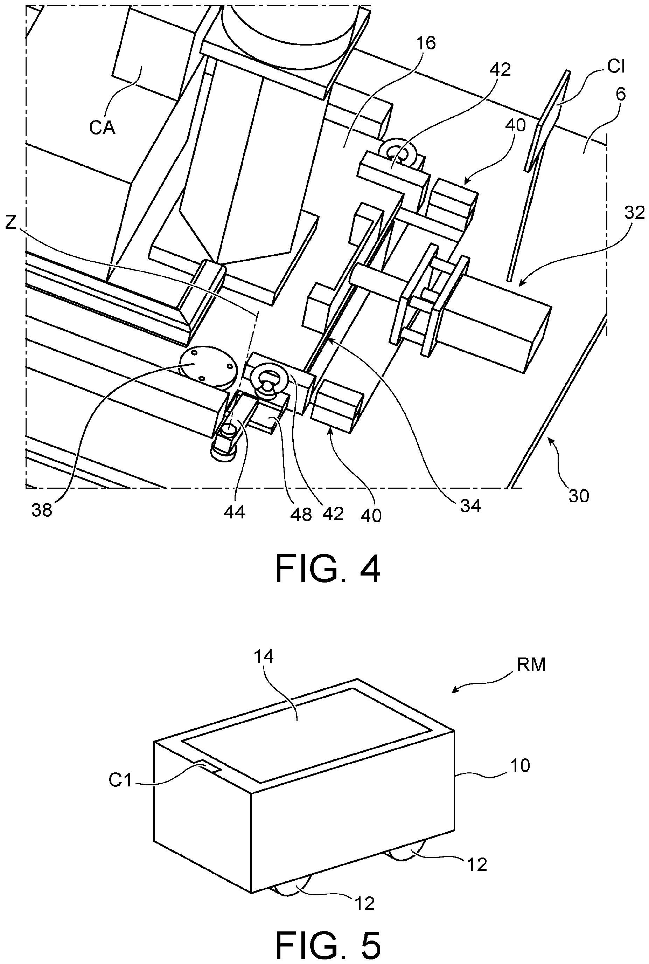

La station d'accueil S est configurée pour permettre la mise en place du robot sur le plateau support 6 au moyen d'un robot mobile RM (figure 5).

Le châssis 2 comporte une extrémité ouverte 7 pour permettre au robot mobile RM de venir se placer sous le plateau support 6.

Dans l'exemple représenté, le châssis 2 comporte quatre pieds 9. Dans l'exemple représenté, les pieds sont reliés deux à deux par des traverses supérieures 11.1, sauf les deux pieds disposés de part et d'autre de l'extrémité ouverte 7. Les pieds sont également reliés deux à deux par des traverses inférieures 11.2 sauf les deux pieds disposés de part et d'autre de l'extrémité ouverte 7. En variante, chaque pied est fixé au plateau sans être reliés mécaniquement entre eux.

Dans cet exemple, la station d'accueil s'étend longitudinalement dans une direction X, l'extrémité ouverte étant à une extrémité longitudinale du châssis 2.

Sur la figure 5, on peut voir une représentation schématique d'un robot mobile RM adapté au transport de robots industriels RI.

Le robot mobile RM est du type véhicule guidé autonome ou AGV (Automated Guided Vehicle en terminologie anglosaxonne). Il comporte un corps 10, des roues 12, un dispositif moteur (non visible) à l'intérieur du corps comprenant un moteur électrique entraînant les roues et une ou plusieurs batteries électriques pour alimenter le moteur électrique. En variante les roues sont remplacées par des chenilles.

Le robot mobile RM comporte des moyens de guidage pour pouvoir se déplacer de manière autonome sur le site industriel. Dans un exemple avantageux, le robot mobile comporte un capteur C1 utilisant un faisceau laser pour la détection, l'analyse et le suivi, de type LiDAR (Light Détection And Ranging en terminologie anglosaxonne), qui met en oeuvre une méthode de calcul qui permet de déterminer la distance entre le capteur et l'obstacle visé. Le capteur réalise une détection de l'environnement dans toutes les directions. Le capteur permet au robot mobile de se repérer dans l'espace. Ainsi le robot mobile est capable de repérer les obstacles et de se déplacer par rapport à ceux-ci de sorte à les éviter.

Le robot mobile RM comporte également un moyen de localisation au sein du site industriel.

Le robot mobile RM comporte sur sa partie supérieure un plateau de transport 14 destiné à supporter un robot. Le plateau de transport est monté sur un mécanisme assurant le déplacement vertical du plateau de transport 14.

Les dimensions de la station d'accueil S, en particulier les dimensions intérieures du châssis 2 sont telles qu'elles permettent au robot mobile RM de pénétrer dans le châssis 2 sous le plateau support 6. En particulier la distance entre les pieds 9 de part et d'autre de l'extrémité ouverte est suffisante pour que le robot mobile RM puisse passer entre les pieds 9.

Le robot comporte une embase 16 et un effecteur 18 articulé dont une extrémité comporte par exemple un outil. Le robot comporte également une unité de commande 21 assurant la commande de l'effecteur en fonction de la tâche à effectuer, par exemple un vissage, un perçage, un pliage...

L'effecteur comporte plusieurs moteurs électriques (non visibles) pour assurer son déplacement au niveau des différentes articulations.

Le robot industriel RI est destiné à reposer sur le plateau de transport 14 du robot mobile RM par son embase 16.

Dans l'exemple représenté, le châssis 2 comporte des plaques latérales 20 et une plaque de fond 22 au niveau de l'extrémité longitudinale fermée pour guider le déplacement du robot à l'intérieur du châssis. En effet, les plaques 20 et 22 forment des surfaces de réflexion pour le capteur C1 du robot mobile, permettant à celui-ci de connaître sa position par rapport au châssis.

Le plateau support 6 présente une forme en U ; il comporte un fond 24 et deux branches 26. Le fond du U 24 est positionné à l'opposé de l'extrémité ouverte du châssis 2, de sorte que le robot mobile RM chargé du robot industriel RI puisse pénétrer dans la station d'accueil.

La distance D entre les bords 26.1 en regard des branches 26 est inférieure à la largeur L de l'embase du robot de sorte que les bords latéraux de l'embase repose sur les branches du U.

La largeur du plateau de transport 14 est inférieure à la distance D entre les deux branches du U pour permettre le passage du plateau de transport 14, comme cela sera expliqué ci-après.

De manière avantageuse, le plateau support comporte des moyens de guidage 28 de l'embase sur le plateau support 6. Les moyens de guidage 28 comportent deux guides latéraux 28.1 fixés sur le plateau support parallèles l'un par rapport à l'autre. La distance entre les deux guides 28.1 est légèrement supérieure à la largeur L de l'embase permettant à l'embase de se déplacer longitudinalement le long de la direction X entre les guides et au-dessus du plateau. La hauteur des guides 28.1 est suffisante pour assurer un guidage latéral de l'embase du robot industriel alors que celui-ci est en position surélevée.

Avantageusement, l'extrémité longitudinale de chaque guide du côté de l'extrémité ouverte de la station d'accueil comporte une face inclinée pour faciliter l'insertion de l'embase entre les guides.

De manière très avantageuse, la station d'accueil comportent des moyens de positionnement du robot industriel sur le plateau support coopérant avec des moyens portés par le robot industriel pour assurer le bon positionnement du robot industriel sur le plateau support. Dans cet exemple, le plateau support 6 comporte deux alésage coniques 36 disposés chacun sur une branche du U, l'un des alésages étant du côté du fond du U et l'autre étant du côté de l'extrémité ouverte ; et l'embase du robot industriel comporte deux goupilles de centrage (non visibles) faisant saillie en direction du plateau support 6 également de forme conique et disposées de sorte à pénétrer dans les alésages 36. La forme conique assure un auto-centrage de l'embase 16 sur le plateau support 6. Plus de deux goupilles, coopérant chacune avec un alésage, sont envisageables.

En variante, les goupilles sont portées par le plateau support et les alésages sont réalisées dans la face inférieure de l'embase.

Il est à noter que la précision de ce positionnement n'est pas suffisante pour permettre au robot industriel de remplir ses tâches.

La station d'accueil comporte une unité de commande UC.

La station d'accueil comporte avantageusement des moyens de détection 40 de la présence du robot industriel. Dans cet exemple, les moyens de détection comportent deux capteurs de fin de course disposés sur le fond du U et destinés à entrer en contact avec la face avant de l'embase. Lorsque le contact est détecté, cela signifie que le robot industriel est dans la position souhaitée par rapport au plateau support. Dans cette position, chaque goupille de centrage est alignée avec un alésage de centrage 36. Dans cet exemple des butées 42 sont fixées sur la face avant de l'embase 16 et viennent en contact avec des capteurs. Les capteurs de position peuvent être des contacts mécaniques, magnétiques, piézoélectriques.

Les butées longitudinales 42 sont avantageusement réglables en position dans la direction X pour permettre un alignement précis entre chaque goupille et son alésage 36.

Très avantageusement, la station d'accueil S comporte des moyens de butée mécanique pour le robot industriel afin d'éviter une détérioration des capteurs en cas d'une erreur de guidage du robot mobile.

Lorsque les capteurs de fin de course détectent le robot, un signal est envoyé à l'unité de commande de la station d'accueil pour l'informer que le robot industriel est dans la position souhaitée. De manière particulièrement avantageuse, l'unité de commande envoie l'information au robot mobile pour qu'il enclenche la phase d'abaissement du robot industriel RI, de sorte qu'il repose sur le plateau support. Très avantageusement, l'unité de commande de la station d'accueil comporte des moyens de communication avec le robot mobile, par exemple par onde radio. Cette communication peut se faire via un réseau de communication du site industriel.

La station d'accueil comporte avantageusement des capteurs de sécurité disposés sur le plateau détectant lorsque l'embase du robot industriel repose effectivement sur le plateau. Lorsque ces capteurs détectent la présence du robot industriel, les vannes d'air peuvent permettre la circulation d'air pour la commande pneumatique.

Dans le cas d'un robot industriel collaboratif, désigné également cobots, des moyens, par exemple un radar, sont mis en oeuvre pour vérifier l'absence de personne avant de permettre l'abaissement du robot industriel et son verrouillage sur la station d'accueil, ce qui permet d'éviter tout risque de pincement.

De préférence, la station d'accueil comporte des moyens pour immobiliser le robot sur la station d'accueil.

Dans l'exemple représenté, les moyens d'immobilisation comportent des moyens de plaquage de l'embase sur le plateau support pour éviter tout mouvement du robot industriel lors de son fonctionnement. Dans cet exemple, les moyens de plaquage comportent deux doigts 44 montés en rotation autour d'un axe vertical Z et en translation autour de l'axe vertical Z sur le plateau support 6 et destinés à venir appuyer sur la face supérieure de l'embase 16, lorsqu'elle est en place. Dans l'exemple représenté, le déplacement des doigts 44 est assuré par des vérins pneumatiques commandés par l'unité de commande de la station d'accueil. L'abaissement des doigts est notamment commandé par l'envoi du signal par les capteurs de présence. Dans l'exemple représenté sur la figure 4, l'embase 16 comporte des évidements 48 au niveau des zones destinées à être en contact avec les doigts. De manière préférée, les doigts 44 se déplacent d'un quart de tour entre la position plaquée et la position non plaquée, ce qui libère l'espace pour la mise en place du robot industriel. Des rotations supérieures à un quart de tour sont envisageables. La mise en oeuvre de vérins pneumatique pour le plaquage permet un plaquage sûr et durable, et évite tout risque de fuite qui existe potentiellement avec des pistons hydrauliques. Dans certaines conditions des pistons hydrauliques sont envisageables. En variante des actionneurs électriques sont également envisageables.

En variante, l'immobilisation met en oeuvre des vérins pneumatiques qui viennent serrer l'embase sur la station d'accueil.

En variante et de manière préférée, les moyens d'immobilisation sont du type verrouillage à billes. Par exemple, la plateforme de la station comporte des goupilles à billes bien connues de l'homme du métier destinées à pénétrer dans des alésages et assure un verrouillage de l'embase en bloquant des billes de la goupille en position déployée. Les goupilles servent également avantageusement à positionner grossièrement le robot industriel sur la station d'accueil. Ce verrouillage est obtenu lorsque l'embase s'abaisse sur la station d'accueil. Les moyens de verrouillage étant positionnés sous l'embase, il n'y a pas de risque de pincement des doigts d'un opérateur par ces moyens. Cette réalisation est particulièrement adaptée au travail collaboratif.

De manière préférée, la station d'accueil comporte des moyens d'alimentation électrique 30 du robot industriel.

Dans l'exemple représenté, les moyens d'alimentation électrique 30 comportent des moyens de connexion électrique 32 disposés sur le fond du U du plateau support de sorte à coopérer avec des moyens de connexion électrique 34 portés par le robot industriel RI lorsque celui-ci est en place sur le plateau support.

De préférence et dans l'exemple représenté, les moyens de connexion électrique 32, 34 sont du type mâle - femelle. Dans l'exemple représenté, les moyens de connexion 32 comportent des broches.

Les moyens de connexion électrique 32 peuvent être déplaçables axialement horizontalement de sorte que, après la mise en place définitive du robot industriel sur le plateau support, la connexion entre les moyens de connexion 32 et 34 ait lieu. Les moyens de connexion 32 sont de préférence déplacés par un vérin pneumatique commandé par l'unité de commande UC de la station d'accueil.

Dans un autre exemple de réalisation, la connexion électrique entre le robot et la station d'accueil est obtenue par gravité. Lorsque le robot est abaissé, les moyens de connexion portés par le robot se connectent directement aux moyens de connexion portés par la station d'accueil. La connexion est automatique et ne demande pas de manipulation supplémentaire.

En variante, lorsque le robot industriel est en place sur la station d'accueil, une connexion manuelle à une alimentation électrique est réalisée.

Très avantageusement, les moyens de connexion électrique permettent également de transférer des programmes informatiques vers l'unité de commande du robot de sorte qu'il soit apte à effectuer la ou les tâches qui lui sont assignées sur la station d'accueil.

L'installation comporte également des moyens de calibration ou d'étalonnage du robot industriel sur la station d'accueil.

L'étalonnage du robot industriel consiste à déterminer, dans sa position particulière sur la station d'accueil, qui varie à chaque mise en place du robot, les valeurs codeurs (décalages codeurs fréquemment appelés offsets codeurs) qui permettent de tenir compte de cette position relative et d'adapter le programme de commande du robot industriel de sorte que ses déplacements et leur amplitude assurent l'exécution d'actions identiques malgré un positionnement différent entre la station d'accueil et le robot.

Très avantageusement, la calibration est réalisée automatiquement dès que le robot est alimenté électriquement.

Les moyens de calibration comportent avantageusement une caméra et une cible.

Par exemple la caméra CA est portée par le robot industriel et la cible CI est portée par la station d'accueil. La cible a une position fixe sur la station d'accueil. La cible et la caméra sont positionnées de sorte que la caméra puisse viser la cible.

Par exemple, les dispositifs de calibration de la marque Sensopart^{®} peuvent être utilisés.

La commande de la caméra peut être réalisée par l'unité de commande du robot industriel ou par l'unité de commande de la station d'accueil via la connexion électrique entre le robot industriel et la station d'accueil.

En variante, on utilise un laser porté par exemple par le robot et une plaque d'orientation connue montée sur la station, le laser suivant les bords de la plaque pour assurer la calibration.

Grâce à ces moyens de calibration, le robot peut être rendu autonome et est prêt à fonctionner sans nécessité d'une intervention extérieure pour assurer sa calibration. En outre, cela évite toute intervention d'un opérateur.

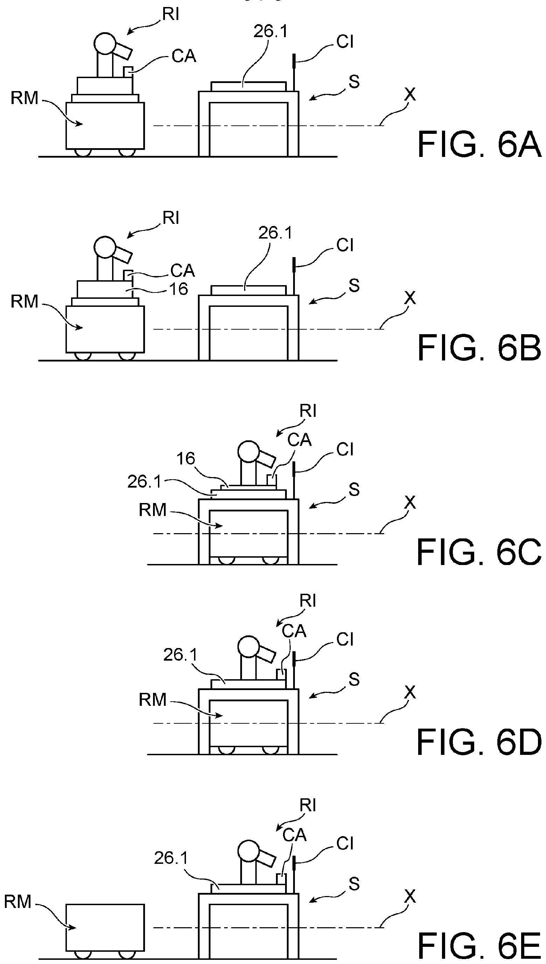

Un exemple de mise en place du robot industriel sur la station d'accueil va maintenant être décrit à l'aide des figures 6A à 6E.

Un ordre est envoyé au robot mobile RM d'amener le robot industriel sur la station d'accueil S. le robot industriel RI est chargé sur le robot mobile RM. On peut envisager que le robot industriel soit sur une station de stockage similaire à la station d'accueil ou sur une autre station d'accueil sur laquelle la tâche qui lui était affectée est terminée. Le robot industriel repose par son embase sur le plateau de transport 14 qui est en position de transport. Le robot industriel est supporté par le plateau de transport de sorte que les goupilles ne soient pas en interaction avec le corps du robot

Le robot mobile RM se déplace en direction de la station d'accueil chargée du robot industriel. Il se dispose en face de l'extrémité ouverte de la station d'accueil S.

Lors d'une étape suivante, le robot mobile RM soulève le plateau de transport 14 en position haute. Cette position est choisie de sorte que les goupilles passent au-dessus du plateau support. En variante, le transport du robot industriel se fait en position haute.

Lors d'une étape suivante, le robot mobile RM se déplace vers la station d'accueil S le long de la direction X et pénètre dans la station d'accueil entre les guides latéraux 28.1, l'insertion de l'embase 16 entre les guides latéraux 28.1 étant facilitée par les bords inclinés. Le robot mobile RM passe sous le plateau support 6, alors que le robot industriel RI est au-dessus du plateau support 6, le mécanisme d'élévation du robot mobile RM traverse verticalement le plateau support 6. Lors de ce déplacement le long de la direction X, le robot industriel est guidé par la coopération de l'embase 16 et des guides latéraux 28.1.

Lors d'une étape suivante, les butées longitudinales viennent en appui contre les capteurs de présence qui envoient alors un signal à l'unité de commande de la station d'accueil. Dans cette position, chacune des deux goupilles de centrage est sensiblement alignée avec un alésage de centrage.

Lors d'une étape suivante, l'unité de commande de la station d'accueil envoie une instruction au robot mobile RM d'abaisser le robot industriel RI afin que l'embase 16 repose sur le plateau support 6. Les goupilles pénètrent alors dans les alésages 36 et du fait de leur forme conique assurent un auto-centrage du robot sur le plateau support.

Les capteurs de détection de la présence du robot sur le plateau détectent le robot et envoient un signal à l'unité de commande, les commandes pneumatiques peuvent être activées.

Lors d'une étape suivante, l'unité de commande UC de la station d'accueil commande les vérins pneumatiques de sorte que les doigts 44 plaquent l'embase 16 sur le plateau support 6.

Lors d'une étape suivante, le robot mobile RM recule et sort de la station d'accueil.

Lors d'une étape suivante, l'unité de commande UC de la station d'accueil commande le vérin des moyens de connexion électrique de déplacer les broches 32 en direction de la partie femelle 34 portée par l'embase. L'alimentation électrique du robot industriel est alors réalisée.

La caméra est positionnée de sorte à viser la cible.

Avantageusement l'unité de commande UC ordonne la calibration du robot industriel pour cela elle actionne la caméra de sorte qu'elle vise la cible. Les signaux collectés par la caméra sont transmis à l'unité de commande qui les traitent et les intègrent au programme de commande du robot industriel.

Avantageusement, l'unité de commande UC charge le programme informatique de la tâche ou les tâches à effectuer par le robot industriel RI dans l'unité de commande du robot industriel via les moyens de connexion. En variante, le programme information est chargé via un serveur FTP (File Transfert Protocol en terminologie anglosaxonne) qui permet de transférer des programmes informatiques par Internet ou par le biais d'un réseau informatique local.

Le robot industriel est prêt à réaliser la ou les tâches requises sur la station d'accueil.

Le retrait du robot industriel de la station d'accueil se fait de manière similaire. Le robot mobile vient se positionner sous le plateau support, met le plateau de transport en position haute, ce qui soulève le robot industriel et le robot mobile sort de la station d'accueil chargé du robot industriel. Les moyens de plaquage auront été préalablement désactivés et la connexion électrique aura été interrompue.

Il peut être prévu un changement automatique du ou des outils du robot industriel si celui-ci n'a pas été adapté avant sa mise en place sur la station d'accueil.

Dans l'exemple représenté, la station d'accueil est configurée pour accueillir un robot industriel. En variante, la station d'accueil peut comporter un plateau support avec plusieurs encoches disposées les unes à côté des autres de sorte à recevoir des robots industriels les uns à côté des autres.

Grâce à l'invention, il est possible d'atteindre une grande automatisation et autonomisation dans le déplacement et la mise en place des robots industriels sur le site industriel, le robot mobile et la station d'accueil pouvant gérer seuls la mise en place du robot industriel et sa mise en service.

## Revendications

1. Installation comportant au moins une station d'accueil pour robot industriel (RI) et au moins un robot industriel muni d'une embase, ladite station d'accueil étant destinée à coopérer avec un robot mobile (RM) muni d'un plateau de transport mobile verticalement et destiné à supporter le robot industriel (RI), ladite station d'accueil s'étendant selon une direction longitudinale (X) et comportant un plateau support (6) supporté par un châssis (2), ledit châssis (2) étant configuré pour recevoir le robot mobile (RM) et ledit plateau support (6) comportant un logement ouvert à une extrémité longitudinale de sorte à présenter une forme en U, permettant la mise en place du robot mobile (RM) sous le plateau support (6) tout en permettant au robot industriel (RI) de se déplacer au-dessus du plateau support (6) et au robot industriel (RI) et de reposer sur le plateau support (6) lors du retrait du plateau de transport (14), dans laquelle ladite installation comporte des moyens de calibration du robot industriel en position sur la station d'accueil, lesdits moyens de calibration étant configurés pour être activés lorsque le robot industriel est en place sur la station d'accueil.

2. Installation selon la revendication 1, dans laquelle les moyens de calibration comportant une caméra portée par le robot ou la station d'accueil et une cible portée par la station d'accueil ou le robot industriel.

3. Installation selon la revendication 2, dans laquelle le robot industriel comporte une unité de commande configurée par assurer la calibration du robot industriel.

4. Installation selon l'une des revendications 1 à 3, dans laquelle ladite station d'accueil comporte des moyens de détection du robot industriel et des moyens de positionnement du robot industriel sur le plateau support (6) configurés pour coopérer avec des moyens portés par le robot industriel.

5. Installation selon la revendication 4, dans laquelle les moyens de détection (40) du robot industriel comportent des capteurs de fin de course positionnés sur un fond du U du plateau support (6) et des moyens portés par l'embase pour détecter que l'embase repose effectivement sur le plateau support.

6. Installation selon l'une quelconque des revendications 1 à 5, comportant des moyens d'immobilisation de l'embase (16) du robot industriel sur le plateau support (6), lesdits moyens d'immobilisation étant avantageusement des moyens de verrouillage à billes entre l'embase et le plateau support.

7. Installation selon l'une quelconque des revendications 1 à 6, comportant des moyens d'alimentation électrique du robot industriel comprenant des moyens de connexion électrique (32) au robot industriel configurés de sorte à assurer la connexion directe des moyens de connexion (32) de la station d'accueil à des moyens de connexion (34) du robot industriel lors de la mise en place du robot industriel sur la station d'accueil.

8. Installation selon l'une quelconque des revendications 1 à 7, comportant une unité de commande (UC) reliée aux moyens de détection (40) de sorte à être informée de la présence du robot industriel et à envoyer un message au robot mobile (RM) afin qu'il abaisse le plateau de transport, de sorte que le robot industriel repose sur le plateau support.

9. Installation selon les revendications 7 et 8, dans laquelle les moyens de connexion électrique (32) sont également configurés pour permettre le chargement de programmes informatiques dans une unité de commande du robot industriel.

10. Installation selon l'une quelconque des revendications précédentes, comportant des moyens de guidages latéraux (28) montés sur le plateau support (6) et configurés pour coopérer avec le robot industriel lors de la mise en place du robot industriel dans la station d'accueil.

11. Procédé de mise en place d'un robot industriel dans une station d'accueil selon l'une quelconque des revendications précédentes, comportant les étapes dans lesquelles :
- Le robot industriel (RI) est chargé sur un robot mobile (RM),
- Le robot mobile (RM) se positionne en regard de l'extrémité ouverte du plateau support (6) aligné avec l'axe longitudinal (X),
- Le robot mobile (RM) positionne le plateau de transport en position haute,
- Le robot mobile (RM) se déplace en direction de la station d'accueil jusqu'à ce que les moyens de détection (40) détectent la présence du robot industriel (RI),
- Le robot mobile (RM) positionne le plateau de transport en position basse, le robot industriel reposant sur le plateau support,
- une calibration du robot industriel a lieu pour tenir compte de son positionnement sur la base d'accueil.
